# EUROPEAN PATENT SPECIFICATION

(11) **EP 4 193 062 B1**
(45) Date of publication and mention of the grant of the patent: **29.11.2023**
(21) Application number: 21782501.7
(22) Date of filing: 21.09.2021
(51) Int. Cl.: F03D 80/30, F03D 80/00, F03D 17/00

(54) **DAMAGE ASSESSMENT ARRANGEMENT**
SCHADENSBEWERTUNGSANORDNUNG
AGENCEMENT D'ÉVALUATION DES DOMMAGES

(30) Priority: 21.10.2020 EP 20203019
(43) Date of publication of application: 14.06.2023
(73) Proprietor: Siemens Gamesa Renewable Energy A/S, 7330 Brande (DK)
(72) Inventor: DEVARAJ, Aravind, 682030 Kochi (IN); GEORGE, Ajoe, 686004 Kerala (IN); R, Aswin, 673521 Calicut (IN); SULAIMAN, Sajeesh, 560087 Bangalore (IN)
(74) Representative: SGRE-Association
(86) International application number: PCT/EP2021/075913
(87) International publication number: WO 2022/083955

(56) References cited:
- EP-A1- 2 151 575
- EP-A1- 2 884 099
- EP-A1- 3 495 655
- EP-A2- 2 551 517
- JP-A- 2017 166 382
- US-A1- 2012 133 143

## Description

The invention describes a damage assessment arrangement for assessing the extent of damage to a lightning receptor electrically connected to a down conductor of a wind turbine rotor blade. The invention also describes a damage assessment method and a calibration method.

A wind turbine is generally equipped with a lightning protection system (LPS) that comprises a network of down conductors which serve to guide lightning current safely to ground in the event of a lightning strike. Generally, the current path to ground will comprise several down conductors at various regions of the wind turbine, as will be known to the skilled person. The rotor blades of a wind turbine are particularly susceptible to lightning strikes on account of their exposed position. Therefore, it is usual to equip a rotor blade with at least one lightning receptor and a down conductor to electrically connect the receptor to the remainder of the LPS. The rotor blade down conductors converge in the hub, and a bridge (for example a set of carbon brushes) provides a lightning path from the hub to ground, for example in to the nacelle, from the nacelle to the tower, and from the tower to ground. EP2884099A1 describes a way of assessing lightning damage to a wind turbine rotor blade by indirectly measuring the current through a lightning current path and deploying sensors to measure various parameters following a lightning strike. EP2551517A2 also suggests indirectly measuring current through a lightning current path and analyzing the measured signal to gain an understanding of the effects of lighting strikes to the wind turbine rotor blades.

A rotor blade down conductor may be assumed to extend from the inner root end of the rotor blade outwards towards the outer tip end. It shall be understood that a lightning receptor is mounted at the exterior of the rotor blade and is electrically connected to the down conductor. A down conductor and its receptors may collectively be referred to herein as a "rotor blade LPS". A rotor blade LPS may comprise several receptors attached at intervals to the down conductor, for example a receptor close to the tip end, and a number of further receptors attached at intervals to the down conductor between tip and root. The mass of a receptor may be in direct proportion to its distance from the root, since a receptor further outward along the rotor blade is more likely to attract a lightning strike.

A receptor is usually a compact block made of one or more metals or metal alloys, and designed to safely attract a lightning strike and to form a robust connection to the down conductor, while at the same time having minimal effect on the rotor blade's aerodynamic performance. A receptor mounted on a wind turbine rotor blade may receive multiple lightning strikes each year, for example several hundred, depending on the geographical location of the wind turbine. Each lightning strike to a receptor results in rapid heating and expansion of the receptor, and some vapourization of the metal. The receptor is also subject to environmental influences such as extreme heat, extreme cold, impact from hailstones, etc. Ultimately, any such receptor will exhibit damage of some kind. The reliability of the receptor may initially be unaffected by minor damage, but subsequent accumulated strikes ultimately have a detrimental effect on the functionality of the receptor. Severe failure may result when the mass of a receptor has been reduced by vapourization to such an extent that it can no longer provide a safe current path to the down conductor. A lightning strike to such a compromised receptor may result in severe damage to the body of the rotor blade.

For this reason, it is important to regularly inspect the receptors and to repair or replace any damaged receptors in order to avoid catastrophic failure. Since the receptors are located on the exterior of the rotor blades, their physical state can generally only be assessed by visual inspection by a technician in a safety harness. However, it is hazardous, expensive and time-consuming to carry out such a visual inspection of the rotor blade receptors, so that this aspect of wind turbine maintenance presents a significant cost factor. Alternatively, a drone equipped with cameras may be deployed to obtain images of the rotor blade LPS receptors, but it is difficult to assess the extent of receptor damage from such images. Examples of prior art solutions are also available in documents EP 2 884 099 A1 and EP 2 551 517 A2.

It is therefore an object of the invention to provide a more economical way of assessing the health of a lightning receptor of a wind turbine rotor blade.

This object is achieved by the damage assessment arrangement of claim 1 and by the method of claim 11 of assessing the extent of damage to a lightning receptor of a wind turbine rotor blade.

In the context of the invention, a wind turbine comprises a number of rotor blades, usually three, mounted to a hub. The rotor blades and hub are collectively referred to as the aerodynamic rotor. As explained above, each rotor blade of a wind turbine may be assumed to be equipped with at least one LPS down conductor extending from the root end of the rotor blade towards the tip end, and with one or more lightning receptors mounted to face outward from the rotor blade near the tip end and electrically connected to the down conductor.

According to the invention, the damage assessment arrangement comprises a measurement pulse module that has a pulse generator arranged to transmit a pulse into the down conductor (at its inner end), and a return signal detector arranged to detect the signal returned after reflection of the pulse by the various elements of the rotor blade LPS. A single transmitted pulse may result in a complex return signal, depending on the realisation of the LPS down conductor and its receptor(s), so that time-delay, distortion and attenuation are recorded for each reflected return signal following a transmitted pulse. The damage assessment arrangement further comprises a return signal analysis module that is configured to determine the extent of alteration of the reflected return signal relative to an expected return signal, and a damage estimation module that is configured to relate the relative extent of alteration to a measure of damage to rotor blade LPS.

In the context of the invention, the "expected return signal" of a healthy rotor blade may be determined early on in the rotor blade lifetime, for example prior to or shortly after installation of the rotor blade. The physical characteristics (geometry, receptor position, receptor mass etc.) of the rotor blade LPS will govern the time-domain and frequency-domain properties of the expected return signal. For example, when several receptors are arranged at intervals along the down conductor, each of these will contribute to the return signal, and the time-domain position of each such contribution is characteristic for the actual position of the receptor. With this information, the return signal can be analysed to determine the health of each of several receptors of the rotor blade LPS. Any alteration to the physical characteristics of a receptor will affect the return signal in some way. Equally, the physical state of the down conductor will affect the return signal, so that damage to the down conductor can also be determined by analysis of the return signal.

An advantage of the inventive damage assessment arrangement is that it makes use of the down conductor that is already installed in a rotor blade to provide a mode of performing LPS receptor health diagnostics. The inventive damage assessment arrangement can therefore be realised with little effort. The pulse generator and return signal detector can be purchased as a simple off-the-shelf unit or set of units, and connection of the measurement pulse module to the down conductor is relatively straightforward.

The analysis module and damage estimation module can be completely or partially realised as software modules running on a processor of a control unit such as a wind turbine controller, for example a local wind turbine controller already installed in the wind turbine, or a remote wind park controller, and may therefore be associated with favourably low costs. The software already installed on an existing system can be updated, with relatively little effort, to install and run the relevant method steps of the present application.

According to the invention, the method of assessing the extent of receptor damage comprises the steps of providing such a damage assessment arrangement; operating the pulse generator of the measurement pulse module to transmit a pulse into one end of a lightning down conductor of a rotor blade of the wind turbine; operating the return signal detector to detect the reflected signal; analysing the reflected return signal to determine the extent of alteration relative to an expected return signal; and relating the relative extent of alteration to a measure of damage to the rotor blade LPS.

An advantage of the inventive method is that a damage estimate can be obtained with relatively little effort, since the method only requires transmitting a pulse into the down conductor that is already installed in the rotor blade and evaluating the reflected signal. The invention is based on the insight that any alteration to the structure of the receptor will cause a known or expected signal shape to be distorted, and the degree of distortion (relative to an expected signal shape) will be related to the degree of alteration - i.e. the degree of damage - to the of the receptor(s) of the down conductor. The invention makes it possible to carry out accurate LPS receptor damage assessment by analysing one or more reflected signals, and this can be done in a straightforward manner with little computational effort.

By regularly assessing receptor health at suitable intervals, it is possible to distinguish between healthy and damaged receptors, so that unnecessary inspection routines can be avoided, and receptor maintenance procedures can be scheduled only when these become necessary.

Particularly advantageous embodiments and features of the invention are given by the dependent claims, as revealed in the following description. Features of different claim categories may be combined as appropriate to give further embodiments not described herein.

In the following, it may be assumed that a lightning down conductor extends from the root region of a rotor blade towards the tip of the rotor blade. The "inner end" of the down conductor shall be understood to be the end that terminates in or near the root region of the blade. The "outer end" of the down conductor shall be understood to be the end that terminates in or near the tip of the blade. The down conductor may extend along the length of the rotor blade in a direction that follows the longitudinal axis of the rotor blade. The down conductor may be assumed to be rigidly mounted in the interior of the rotor blade, and may for example be secured at several points along its length to the interior surface of the rotor blade. The down conductor can be suspended in the interior cavity of the rotor blade, or it may lie against the interior surface of the rotor blade. Equally, a down conductor may be partially or completely embedded in a wall of the rotor blade. Regardless of how the down conductor is actually realised, a main aspect of the invention is that any deterioration of the structure of a receptor attached to the down conductor will distort a pulse transmitted from the inner end of the down conductor, and the extent or nature of the distortion will be related to the extent or nature of the deterioration of the receptor.

The inventive wind turbine also comprises an embodiment of the inventive damage assessment arrangement. Preferably, the damage assessment arrangement is realised to transmit a pulse into the end of the lightning down conductors of all rotor blades and to detect each reflected signal. This can be done by providing three measurement pulse modules and connecting each to a down conductor, or by connecting a single measurement pulse module to the three down conductors. The advantage of using three measurement pulse modules is that each can operate independently of the other, so that the health of the receptors can be assessed simultaneously for all rotor blades.

However, the use of a single measurement pulse module is more economical. Therefore, in a particularly preferred embodiment of the invention, the measurement pulse module comprises a single pulse generator and a single return signal detector. In this preferred embodiment, an identical pulse is transmitted to each rotor blade in turn. Pulse transmission and the detection of the reflected signal can be accomplished within a very brief time.

A measurement pulse module is preferably arranged in the wind turbine hub or at a suitable location near the root regions of the rotor blades. A measurement pulse module is preferably connected to a rotor blade down conductor using a low impedance cable, for example a 50 Q coaxial cable, and a suitable connector. Appropriate measures may be taken to protect the measurement pulse module from lightning current, as will be known to the skilled person.

The rotor blade LPS health can be assessed on the basis of the time delay and/or the degree of distortion and/or the degree of attenuation of the reflected return signal.

The down conductor of a rotor blade may be regarded as an antenna. A pulse transmitted into an ideal straight antenna will be returned (reflected) with some time delay but without any significant attenuation or distortion. However, for various reasons, a rotor blade down conductor does not behave as an ideal antenna, so that the pulse reflected by a pristine arrangement of down conductor and receptor(s) will exhibit a time delay as well as some amount of attenuation and distortion. These parameters will also be affected by the curvature of the down conductor, which in turn may be influenced by the angular position of the rotor blade and by any deflection in the outboard region caused by wind loading. Preferably, therefore, calibration and damage assessment are carried out under similar conditions, for example with the rotor blade at the "six o'clock" position, when wind speed is less than a certain threshold (the rotor blade is not bent by wind loads), etc.

In the following, therefore, the signal that is reflected by a down conductor under such conditions is referred to as the "expected" or "healthy" return signal, since it represents the expected behaviour of a healthy rotor blade LPS.

For example, if the reflected return signal has a similar shape to the expected return signal, and if the reflected return signal has been attenuated only slightly, this can be interpreted to mean that the structure of the rotor blade LPS is in good health, i.e. its elements have not sustained any significant damage and the electrical connection between each receptor and down conductor is sound. It would not be necessary to include the receptor(s) of that rotor blade in a planned maintenance routine. In another example, if the reflected return signal is significantly distorted and/or attenuated compared to the expected return signal, this can be interpreted to mean that a receptor and/or its electrical connection may have sustained severe damage. In this case, it would be appropriate to schedule an inspection and maintenance routine for that rotor blade.

According to the invention, the shape of the expected return signal is determined in a previous calibration step. To this end, the damage assessment arrangement is calibrated as follows. For a receptor position of a specific rotor blade down conductor, a pristine (new and undamaged) receptor is obtained, as well as several receptors exhibiting varying measures of damage. The measure of damage of each receptor is quantified or classified using some suitable mode, for example a scale from 1 (pristine, new, undamaged) to 10 (severe fault). The selected set of receptors is connected at the various positions along the down conductor. The measurement pulse module is operated in order to obtain a reflected return signal. This measurement step is initially carried out with only pristine receptors mounted to the down conductor, in order to obtain an exemplary "expected return signal" for that rotor blade LPS. The time-domain and frequency-domain signal characteristics of the expected return signal are then stored as a reference for that rotor blade LPS.

The measurement step is then carried out with various combinations of the damaged receptors mounted to the down conductor, in order to obtain the corresponding return signals. For example, for a rotor blade LPS with three receptors, and ten versions of each receptor as explained above, the measurement step can be carried out ten times in order to obtain the expected return signal (all receptors have damage class 1) and nine return signals, each of which is obtained for receptors with a specific damage class. The measurement step can be carried out any number of times to cover all possible combinations.

The distortion of a reflected return signal relative to the expected return signal is quantified in some suitable manner, for example by a set of values for time delay, attenuation, distortion, number of peaks/troughs in the return signal, etc. The outcome of the calibration procedure can be a catalogue or table listing receptor health classes against corresponding signal parameter sets. In this way, a "library" can be compiled to relate return signal shapes to damage levels. Of course, as will be known to the skilled person, machine learning could be deployed to learn how to identify damage to receptors from a training set of return signals.

A favourable accuracy is obtained by providing a set of receptors that exhibit a broad range of damage, i.e. from undamaged (corresponding to factory-new) to severely damaged (corresponding to a receptor at the end of its lifetime after sustaining multiple lightning strikes), with many intermediate levels of damage.

The calibration method preferably comprises a step of compiling a look-up-table that relates the measure of damage of each receptor to the corresponding reflected signal parameters. Preferably, a look-up-table is compiled for a specific rotor blade LPS assembly, i.e. a down conductor and one or more receptors.

The calibration procedure may be repeated for various temperature ranges, since electrical conductivity is temperature-dependent. A LUT can be prepared for each temperature range, e.g. a LUT for the -10°C to 0°C range, another LUT for the 0°C to 10°C range, another LUT for the 10°C to 20°C range, etc. When assessing receptor damage, an ambient temperature reading is obtained, and the appropriate LUT is consulted.

Machine learning can be used to analyse the expected return signal under various operating conditions and in respect of various parameters. In a return signal obtained using imperfect receptors, any deviation from the expected values can be processed using machine learning to deduce the associated extent of damage. During the lifetime of the rotor blade, machine learning can be applied to the rotor blade LPS return signals to determine the extent of damage.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 shows a conventional wind turbine;
Figure 2 illustrates elements of a rotor blade LPS;
Figure 3 is a schematic diagram showing exemplary signals;
Figure 4 shows a block diagram of an embodiment of the inventive damage assessment arrangement.

In the diagrams, like numbers refer to like objects throughout. Objects in the diagrams are not necessarily drawn to scale.

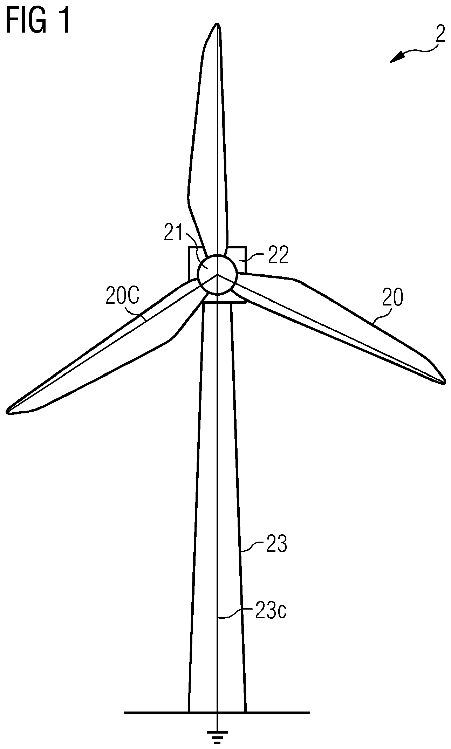

Figure 1 shows a conventional wind turbine 2, which has an aerodynamic rotor comprising three rotor blades 20 mounted to a hub 21. A generator is housed in a nacelle 22, which is mounted atop a tower 23. A very simplified set of lightning down conductors 20C, 23C of the wind turbine's LPS is indicated for the purpose of illustration. The down conductors and other elements of the wind turbine LPS are generally arranged in interior cavities, in the tower wall, etc., as will be known to the skilled person. In a well-designed LPS, lightning current from a lightning strike to any part of the wind turbine will see an essentially direct path to ground.

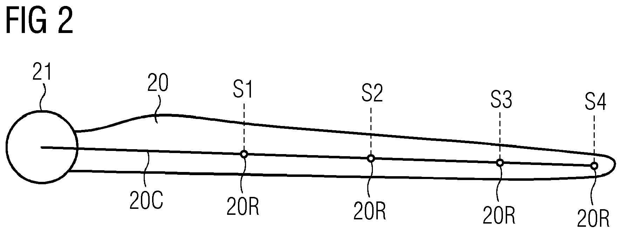

Figure 2 illustrates elements of an exemplary rotor blade LPS. The diagram shows the tip region of a rotor blade 20, a down conductor 20C arranged in the rotor blade interior, and multiple receptors 20R at various positions S1, S2, S3, S4. A tip-end receptor 20R at position S4 is shaped for mounting near the outermost tip end of the rotor blade 20, and connects electrically to the down conductor 20C. Several side receptors 20R at positions S1 - S3 are shaped for mounting on the pressure side or suction side of the rotor blade and also connect electrically to the down conductor 20C, which may be assumed to be installed in the interior of the rotor blade 20. During the lifetime of the rotor blade, the receptors 20R can deteriorate as described above. Material evaporation along with any surface damage will manifest as distortion of a return signal (relative to an expected signal) when a pulse is transmitted into the down conductor.

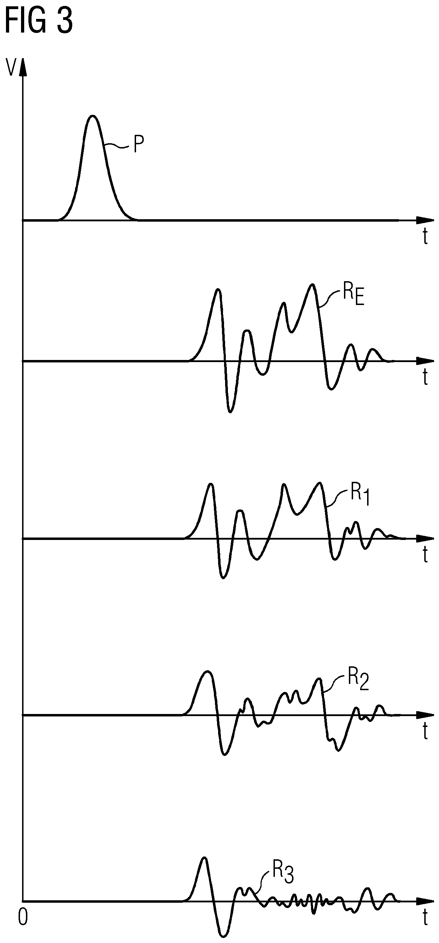

This is illustrated in Figure 3, which shows exemplary signal shapes. The drawing shows a Gaussian pulse P at the point of its transmission into the end of a down conductor 20C, and the shape of an expected return signal R_{E}, i.e. shape of the return signal after reflection by undamaged elements of a pristine (new) rotor blade LPS. The diagram also shows several possible return signals R1, R2, R3 received after reflection by the rotor blade LPS.

A first reflected signal R1 has undergone only minor distortion relative to the expected return signal R_{E}, so that the rotor blade LPS may be deemed to be healthy. The receptors 20R are each assigned an appropriate damage assessment level, for example: D_{good} meaning "receptor is healthy". A second reflected signal R2 has undergone minor distortion relative to the expected return signal R_{E}, indicating that the receptors are functional but have sustained minor damage. Each receptor 20R is assigned an appropriate damage assessment level, for example: D_{mild} meaning "receptor exhibits slight wear". A third reflected signal R3 has undergone severe distortion relative to the expected return signal R_{E}, indicating that at least one receptor may no longer be reliable. Analysis of the reflected signal R3 indicates that the receptor 20R at the third position S3 is no longer reliable, while the receptors at the other positions have sustained significant levels of wear. The receptors are assigned appropriate damage assessment levels, for example: D_{fail} meaning "receptor fail" for the receptor at position S3; and Dₚₒₒᵣ for the remaining receptors. This exemplary diagram indicates a time-domain representation of the return signals, but it shall be understood that the damage levels can be deduced from a time-domain and frequency-domain analysis of the return signal. Of course, these damage assessment levels are proposed only by way of example, and any number of damage assessment levels may be used to cover a broader range of "health states" for the rotor blade LPS receptors.

By collecting information in a calibration phase, using many instances of that receptor and down conductor arrangement, a look-up table (LUT) can be compiled to relate parameters of such return signals to receptor damage. The damage assessment levels described in the above example may be chosen by identifying a "best match" between the parameters of a reflected signal and the parameters of a LUT entry, as will be known to the skilled person.

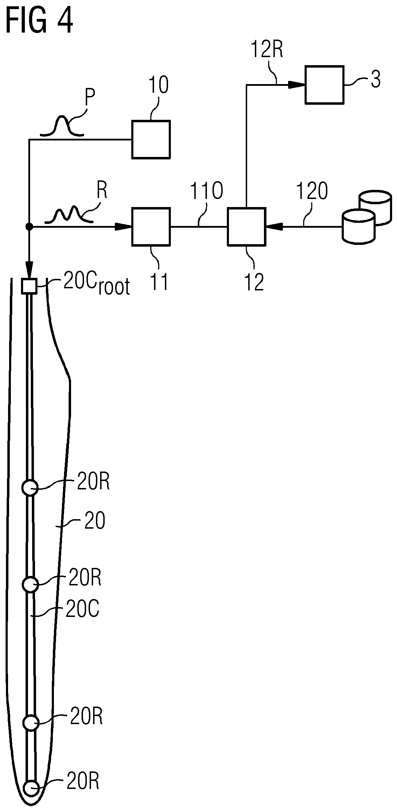

Figure 4 is a simplified schematic to illustrate the inventive damage assessment arrangement 1 installed in an operational wind turbine. The diagram shows a measurement pulse module comprising a pulse generator 10 and a return signal detector 11. The measurement pulse module 10, 11 is connected to the down conductor 20C of a rotor blade 20, for example by means of a 50 Q coaxial cable and a suitable connector. The pulse generator 10 is arranged to transmit a pulse P into the inner end 20Cᵣₒₒₜ of the lightning down conductor 20C. The return signal detector 11, for example a time-domain reflectometer and/or a digital sampling oscilloscope, is arranged to detect the reflected return signal R, and can be realised to report a time delay of the reflected return signal R and/or a magnitude of the reflected return signal R and/or the shape of the reflected return signal R. These parameters(s) 110 are recorded for each detected return signal R.

In this exemplary embodiment, the pulse generator 10 applies an electrical pulse P to the inner end 20Cᵣₒₒₜ of the lightning conductor 20C. The pulse P - for example a Gaussian pulse P - travels along the lightning conductor 20C in the direction of the tip. The pulse P will travel to the outer end of the down conductor 20C, where it is reflected. Any receptor 20R (e.g. at positions S1 - S4 of Figure 2) connected to the down conductor 20C will contribute in some way to the distortion of the pulse, which travels back to the inner end of the down conductor 20C where it is detected as the return signal R by the pulse detector 11. Of course, as will be known to the skilled person, the down conductor itself will also contribute to some extent to the distortion of the return signal R.

A receptor damage assessment unit 12 is configured to estimate the receptor health on the basis of the observed reflection parameters 110 recorded by the return signal detector 11. In a straightforward embodiment as indicated here, the observed reflection parameters 110 can be matched to the closest corresponding entry in a look-up table 120 as described above. For example, a set of return signal parameters 110 reported by the return signal detector 11 can be matched to a set of return signal parameters in the database 120, and the corresponding damage assessment level 12R can be identified and reported to an operator or controller, for example to a remote wind park operator 4. The operator can then decide whether a service schedule is necessary (e.g. the damage assessment level 12R is classified as "poor" or "fail") or whether a service schedule is not necessary (e.g. the damage assessment level is classified as "good" or only "mild").

The scope of the invention is defined by the appended claims.

## Claims

1. A damage assessment arrangement (1) for assessing the extent of damage to a lightning receptor (20R) electrically connected to a down conductor (20C) of a wind turbine rotor blade (20), which damage assessment arrangement (1) comprises
- a measurement pulse module (10, 11) comprising a pulse generator (10) arranged to transmit a pulse (P) into one end of the down conductor (20C) and a return signal detector (11) arranged to detect the return signal (R, R1, R2, R3);
- a return signal analysis module (12) configured to determine the extent of alteration of the return signal (P_{R}) relative to an expected return signal (R_{E}); and
- a damage estimation module (12) configured to relate the relative extent of alteration to a measure of damage (D_{good}, D_{mild}, Dₚₒₒᵣ, D_{fail}) to a receptor (20R).

2. A damage assessment arrangement according to claim 1, wherein the pulse analysis module (12) is configured to quantify the time delay of the return signal (R, R1, R2, R3) relative to the expected return signal (R_{E}).

3. A damage assessment arrangement according to any of the preceding claims, wherein the pulse analysis module (12) is configured to quantify the attenuation of the return signal (R, R1, R2, R3) relative to the expected return signal (R_{E}).

4. A damage assessment arrangement according to any of the preceding claims, the pulse analysis module (12) is configured to quantify the distortion of the return signal (R, R1, R2, R3) relative to the expected return signal (R_{E}).

5. A damage assessment arrangement according to any of the preceding claims, wherein an assessment of damage (D_{good}, D_{mild}, Dₚₒₒᵣ, D_{fail}) to a receptor (20R) is made on the basis of the time delay and/or the attenuation and/or the distortion of the return signal (R, R1, R2, R3).

6. A damage assessment arrangement according to any of the preceding claims, wherein an assessment of damage to the down conductor (20C) is made on the basis of time delay and/or attenuation and/or distortion of the return signal (R, R1, R2, R3) .

7. A damage assessment arrangement according to any of the preceding claims, comprising a look-up table (120) relating values of time delay and/or attenuation and/or distortion to measures of damage to a receptor type.

8. A wind turbine (2) comprising
- a plurality of rotor blades (20), wherein each rotor blade (20) comprises a down conductor (20C) of a lightning protection system, and at least one lightning receptor (20R)arranged at the rotor blade exterior and electrically connected to the down conductor (20C); and
- a damage assessment arrangement (1) according to any of claims 1 to 7 for assessing the extent of damage to the receptors (20R).

9. A wind turbine according to claim 8, wherein the measurement pulse module (10, 11) comprises a single pulse generator (10), and a return signal detector (11) for each rotor blade down conductor (20).

10. A wind turbine according to claim 8 or claim 9, wherein the damage assessment unit (12) is at least partially implemented at a location remote from the wind turbine (2).

11. A method of assessing the extent of damage to a lightning receptor (20R) electrically connected to a down conductor (20C) of a wind turbine rotor blade (20), which method comprises
- providing a damage assessment arrangement (1) according to any of claims 1 to 7;
- operating the pulse generator (10) of the measurement pulse module (10, 11) to transmit a pulse (P) into one end (20Cᵣₒₒₜ) of the lightning down conductor (20C) ;
- operating the return signal detector (11) of the measurement pulse module (10, 11) to detect the return signal (R, R1, R2, R3);
- analysing the return signal (R, R1, R2, R3) to determine the extent of alteration relative to an expected return signal (R_{E}) ; and
- relating the relative extent of alteration to a measure of damage (D_{good}, D_{mild}, Dₚₒₒᵣ, D_{fail}) to the receptors (20R) of that lightning down conductor (20C).

12. A method of calibrating the damage assessment arrangement of claims 1 to 7, comprising the steps of
A) providing, for each receptor position (S1, S2, S3, S4) of a rotor blade down conductor (20C), an undamaged receptor and a plurality of damaged receptors;
B) selecting a set of receptors (20R) for connection to the receptor positions (S1, S2, S3, S4) of the down conductor (20C) and quantifying the measure of damage (D_{good}, D_{mild}, Dₚₒₒᵣ, D_{fail}) of each receptor (20R) ;
C) connecting the receptors (20R) of the selected set to the receptor positions (S1, S2, S3, S4) of the down conductor (20C) and
- operating the measurement pulse module (10, 11) to transmit a pulse (P) into the down conductor (20C) and to record the return signal (R, R1, R2, R3);
- relating the parameters of the return signal (R, R1, R2, R3) to the quantified measures of damage (D_{good}, D_{mild}, Dₚₒₒᵣ, D_{fail}) for the receptors; and
D) repeating steps B and C for multiple combinations of damaged and undamaged receptors.

13. A method according to claim 12, comprising a step of compiling a look-up-table that relates the measure of damage (D_{good}, D_{mild}, Dₚₒₒᵣ, D_{fail}) of each receptor (20R) to the corresponding return signal (R, R1, R2, R3).

14. A method according to claim 12 or claim 13, wherein a look-up-table is compiled for a specific receptor type and a specific down-conductor type.

15. A method according to any of claims 12 to 14, wherein the calibration procedure is performed multiple times, and each calibration procedure is performed for a distinct temperature range.

## Patentansprüche

1. Schadensbewertungsanordnung (1) zum Bewerten des Schadensausmaßes an einem Blitzrezeptor (20R), der elektrisch mit einem Ableiter (20C) eines Rotorblatts (20) einer Windturbine verbunden ist, wobei die Schadensbewertungsanordnung (1) umfasst
- ein Messimpulsmodul (10, 11), das einen Impulsgenerator (10) umfasst, der angeordnet ist, um einen Impuls (P) in ein Ende des Ableiters (20C) zu übertragen, und einen Rücksignaldetektor (11), der angeordnet ist, um das Rücksignal (R, R1, R2, R3) zu detektieren;
- ein Rücksignal-Analysemodul (12), das dazu ausgelegt ist, das Ausmaß der Veränderung des Rücksignals (P_{R}) relativ zu einem erwarteten Rücksignal (R_{E}) zu bestimmen; und
- ein Schadensabschätzungsmodul (12), das dazu ausgelegt ist, das relative Ausmaß der Veränderung mit einem Schadensmaß (D_{good}, D_{mild}, Dₚₒₒᵣ, D_{fail}) an einem Rezeptor (20R) in Beziehung zu setzen

2. Schadensbewertungsanordnung nach Anspruch 1, wobei das Impulsanalysemodul (12) dazu ausgelegt ist, die Zeitverzögerung des Rücksignals (R, R1, R2, R3) relativ zu dem erwarteten Rücksignal (R_{E}) zu quantifizieren.

3. Schadensbewertungsanordnung nach einem der vorhergehenden Ansprüche, wobei das Impulsanalysemodul (12) dazu ausgelegt ist, die Dämpfung des Rücksignals (R, R1, R2, R3) relativ zu dem erwarteten Rücksignal (R_{E}) zu quantifizieren.

4. Schadensbewertungsanordnung nach einem der vorhergehenden Ansprüche, wobei das Impulsanalysemodul (12) dazu ausgelegt ist, die Verzerrung des Rücksignals (R, R1, R2, R3) relativ zu dem erwarteten Rücksignal (R_{E}) zu quantifizieren.

5. Schadensbewertungsanordnung nach einem der vorhergehenden Ansprüche, wobei eine Bewertung des Schadens (D_{good}, D_{mild}, Dₚₒₒᵣ, D_{fail}) an einem Rezeptor (20R) auf der Grundlage der Zeitverzögerung und/oder der Dämpfung und/oder der Verzerrung des Rücksignals (R, R1, R2, R3) vorgenommen wird.

6. Schadensbewertungsanordnung nach einem der vorhergehenden Ansprüche, wobei eine Bewertung des Schadens an dem Ableiter (20C) auf der Grundlage der Zeitverzögerung und/oder Dämpfung und/oder Verzerrung des Rücksignals (R, R1, R2, R3) erfolgt.

7. Schadensbewertungsanordnung nach einem der vorhergehenden Ansprüche, umfassend eine Nachschlagetabelle (120), die Werte der Zeitverzögerung und/oder der Dämpfung und/oder der Verzerrung mit Schadensmaßen eines Empfängertyps in Beziehung setzt.

8. Windturbine (2), umfassend
- eine Mehrzahl von Rotorblättern (20), wobei jedes Rotorblatt (20) einen Ableiter (20C) eines Blitzschutzsystems und mindestens einen Blitzrezeptor (20R) umfasst, der an der Rotorblattaußenseite angeordnet und elektrisch mit dem Ableiter (20C) verbunden ist; und
- eine Schadensbewertungsanordnung (1) nach einem der Ansprüche 1 bis 7 zum Bewerten des Schadensausmaßes an den Rezeptoren (20R).

9. Windturbine nach Anspruch 8, wobei das Messimpulsmodul (10, 11) einen Einzelimpulsgenerator (10) und einen RücksignalDetektor (11) für jeden Rotorblatt-Ableiter (20) umfasst.

10. Windturbine nach Anspruch 8 oder Anspruch 9, wobei die Schadensbewertungseinheit (12) zumindest teilweise an einem von der Windturbine (2) entfernten Ort implementiert ist.

11. Verfahren zum Bewerten des Schadensausmaßes an einem Blitzrezeptor (20R), der elektrisch mit einem Ableiter (20C) eines Rotorblatts (20) einer Windturbine verbunden ist, wobei das Verfahren umfasst
- Bereitstellen einer Schadensbewertungsanordnung (1) nach einem der Ansprüche 1 bis 7;
- Betreiben des Impulsgenerators (10) des Messimpulsmoduls (10, 11), um einen Impuls (P) in ein Ende (20Cᵣₒₒₜ) des Blitzableiters (20C) zu übertragen;
- Betreiben des Rücksignal-Detektors (11) des Messimpulsmoduls (10, 11), um das Rücksignal (R, R1, R2, R3) zu detektieren;
- Analysieren des Rücksignals (R, R1, R2, R3), um das Ausmaß der Veränderung relativ zu einem erwarteten Rücksignal (Re) zu bestimmen; und
- das relative Ausmaß der Veränderung mit einem Schadensmaß (D_{good}, D_{mild}, Dₚₒₒᵣ, D_{fail}) an den Rezeptoren (20R) dieses Blitzableiters (20C) in Beziehung setzt.

12. Verfahren zum Kalibrieren der Schadensbewertungsanordnung nach den Ansprüchen 1 bis 7, umfassend die folgenden Schritte
A. Bereitstellen eines unbeschädigten Rezeptors und einer Mehrzahl beschädigter Rezeptoren für jede Rezeptorposition (S1, S2, S3, S4) eines Rotorblattableiters (20C);
B. Auswählen eines Satzes von Rezeptoren (20R) zum Verbinden mit den Rezeptorpositionen (S1, S2, S3, S4) des Ableiters (20C) und Quantifizieren des Schadensmaßes (D_{good}, D_{mild}, Dₚₒₒᵣ, D_{fail}) jedes Rezeptors (20R) ;
C. Verbinden der Rezeptoren (20R) des ausgewählten Satzes mit den Rezeptorpositionen (S1, S2, S3, S4) des Ableiters (20C) und
- Betreiben des Messimpulsmoduls (10, 11), um einen Impuls (P) in den Ableiter (20C) zu übertragen und das Rücksignal (R, R1, R2, R3) aufzuzeichnen;
- die Parameter des Rücksignals (R, R1, R2, R3) mit den quantifizierten Schadensmaßen (D_{good}, D_{mild}, Dₚₒₒᵣ, D_{fail}) für die Rezeptoren in Beziehung zu setzen; und
D. Wiederholen der Schritte B und C für mehrere Kombinationen von beschädigten und unbeschädigten Rezeptoren.

13. Verfahren nach Anspruch 12, umfassend einen Schritt des Zusammenstellens einer Nachschlagetabelle, die das Schadensmaß (D_{good}, D_{mild}, Dₚₒₒᵣ, D_{fail}) eines jeden Rezeptors (20R) mit dem entsprechenden Rücksignal (R, R1, R2, R3) in Beziehung setzt.

14. Verfahren nach Anspruch 12 oder Anspruch 13, wobei eine Nachschlagetabelle für einen spezifischen Rezeptortyp und einen spezifischen Ableitertyp zusammengestellt wird.

15. Verfahren nach einem der Ansprüche 12 bis 14, wobei der Kalibriervorgang mehrmals durchgeführt wird, und jeder Kalibriervorgang für einen gesonderten Temperaturbereich durchgeführt wird.

## Revendications

1. Agencement d'évaluation de dommages (1) pour évaluer l'étendue des dommages à un récepteur de foudre (20R) connecté électriquement à un conducteur de descente (20C) d'une pale de rotor d'éolienne (20), lequel agencement d'évaluation de dommages (1) comprend
- un module d'impulsions de mesure (10, 11) comprenant un générateur d'impulsions (10) agencé pour transmettre une impulsion (P) dans une extrémité du conducteur de descente (20C) et un détecteur de signal de retour (11) agencé pour détecter le signal de retour (R, R1, R2, R3) ;
- un module d'analyse de signal de retour (12) conçu pour déterminer l'étendue de l'altération du signal de retour (P_{R}) par rapport à un signal de retour attendu (R_{E}) ; et
- un module d'estimation de dommages (12) conçu pour relier l'étendue relative de l'altération à une mesure de dommages (D_{good}, D_{mild}, Dₚₒₒᵣ, D_{fail}) à un récepteur (20R) .

2. Agencement d'évaluation de dommages selon la revendication 1, dans lequel le module d'analyse d'impulsions (12) est conçu pour quantifier le retard du signal de retour (R, R1, R2, R3) par rapport au signal de retour attendu (R_{E}).

3. Agencement d'évaluation de dommages selon l'une quelconque des revendications précédentes, dans lequel le module d'analyse d'impulsions (12) est conçu pour quantifier l'atténuation du signal de retour (R, R1, R2, R3) par rapport au signal de retour attendu (R_{E}) .

4. Agencement d'évaluation de dommages selon l'une quelconque des revendications précédentes, le module d'analyse d'impulsions (12) est conçu pour quantifier la distorsion du signal de retour (R, R1, R2, R3) par rapport au signal de retour attendu (R_{E}).

5. Agencement d'évaluation de dommages selon l'une quelconque des revendications précédentes, dans lequel une évaluation des dommages (D_{good}, D_{mild}, Dₚₒₒᵣ, D_{fail}) par rapport à un récepteur (20R) est effectuée sur la base du retard et/ou de l'atténuation et/ou de la distorsion du signal de retour (R, R1, R2, R3).

6. Agencement d'évaluation de dommages selon l'une quelconque des revendications précédentes, dans lequel une évaluation des dommages au conducteur de descente (20C) est effectuée sur la base d'un retard et/ou d'une atténuation et/ou d'une distorsion du signal de retour (R, R1, R2, R3).

7. Agencement d'évaluation de dommages selon l'une quelconque des revendications précédentes, comprenant une table de correspondance (120) reliant des valeurs de retard et/ou d'atténuation et/ou de distorsion à des mesures de dommages à un type de récepteur.

8. Éolienne (2) comprenant
- une pluralité de pales de rotor (20), dans laquelle chaque pale de rotor (20) comprend un conducteur de descente (20C) d'un système de protection contre la foudre, et au moins un récepteur de foudre (20R) disposé à l'extérieur des pales de rotor et connecté électriquement au conducteur de descente (20C) ; et
- un agencement d'évaluation de dommages (1) selon l'une quelconque des revendications 1 à 7 pour évaluer l'étendue des dommages aux récepteurs (20R).

9. Éolienne selon la revendication 8, dans laquelle le module d'impulsions de mesure (10, 11) comprend un seul générateur d'impulsions (10), et un détecteur de signal de retour (11) pour chaque conducteur de descente de pale de rotor (20).

10. Éolienne selon la revendication 8 ou la revendication 9, dans laquelle l'unité d'évaluation de dommages (12) est au moins partiellement mise en œuvre à un emplacement éloigné de l'éolienne (2).

11. Procédé d'évaluation de l'étendue de dommages à un récepteur de foudre (20R) connecté électriquement à un conducteur de descente (20C) d'une pale de rotor d'éolienne (20), lequel procédé comprend
- fournir un agencement d'évaluation de dommages (1) selon l'une quelconque des revendications 1 à 7 ;
- faire fonctionner le générateur d'impulsions (10) du module d'impulsions de mesure (10, 11) pour transmettre une impulsion (P) dans une extrémité (20Cᵣₒₒₜ) du conducteur de descente de foudre (20C) ;
- faire fonctionner le détecteur de signal de retour (11) du module d'impulsions de mesure (10, 11) pour détecter le signal de retour (R, R1, R2, R3) ;
- analyser le signal de retour (R, R1, R2, R3) pour déterminer l'étendue de l'altération par rapport à un signal de retour attendu (R_{E}) ; et
- relier l'étendue relative de l'altération à une mesure de dommages (D_{good}, D_{mild}, Dₚₒₒᵣ, D_{fail}) aux récepteurs (20R) de ce conducteur de descente de foudre (20C).

12. Procédé de calibrage de l'agencement d'évaluation de dommages selon les revendications 1 à 7, comprenant les étapes de
A) fourniture, pour chaque position de récepteur (S1, S2, S3, S4) d'un conducteur de descente de pale de rotor (20C), d'un récepteur non endommagé et d'une pluralité de récepteurs endommagés ;
B) sélection d'un ensemble de récepteurs (20R) pour connexion aux positions de récepteur (S1, S2, S3, S4) du conducteur de descente (20C) et quantification de la mesure de dommages (D_{good}, D_{mild}, Dₚₒₒᵣ, D_{fail}) de chaque récepteur (20R) ;
C) connexion des récepteurs (20R) de l'ensemble sélectionné aux positions de récepteur (S1, S2, S3, S4) du conducteur de descente (20C) et
- faire fonctionner le module d'impulsions de mesure (10, 11) pour transmettre une impulsion (P) dans le conducteur de descente (20C) et pour enregistrer le signal de retour (R, R1, R2, R3) ;
- relier les paramètres du signal de retour (R, R1, R2, R3) aux mesures quantifiées de dommages (D_{good}, D_{mild}, Dₚₒₒᵣ, D_{fail}) pour les récepteurs ; et
D) répéter les étapes B et C pour de multiples combinaisons de récepteurs endommagés et non endommagés.

13. Procédé selon la revendication 12, comprenant une étape de compilation d'une table de correspondance qui relie la mesure de dommages (D_{good}, D_{mild}, Dₚₒₒᵣ, D_{fail}) de chaque récepteur (20R) au signal de retour correspondant (R, R1, R2, R3).

14. Procédé selon la revendication 12 ou la revendication 13, dans lequel une table de correspondance est compilée pour un type de récepteur spécifique et un type de conducteur de descente spécifique.

15. Procédé selon l'une quelconque des revendications 12 à 14, dans lequel la procédure de calibrage est effectuée plusieurs fois, et chaque procédure de calibrage est effectuée pour une plage de température distincte.
